# EUROPEAN PATENT SPECIFICATION

(11) **EP 2 689 155 B1**
(45) Date of publication and mention of the grant of the patent: **13.05.2015**
(21) Application number: 11711837.2
(22) Date of filing: 25.03.2011
(51) Int. Cl.: F16C 33/72, F16C 41/00, B61F 15/26

(54) **BEARING ARRANGEMENT WITH ROTATIONAL SPEED SENSOR**
LAGERANORDNUNG MIT DREHZAHLSENSOR
AGENCEMENT DE PALIER DE ROULEMENT AVEC CAPTEUR DE VITESSE DE ROTATION

(43) Date of publication of application: 29.01.2014
(73) Proprietor: Aktiebolaget SKF, 415 50 Göteborg (SE)
(72) Inventor: MARTINEZ, Victor, E-28045 Madrid (ES); MORETTI, Roberto, I-10064 Pinerolo (IT); SOZZI, Fabrizio, I-10050 Sant' Antonino di Susa (TO) (IT); SCHMIECHEN, Rolf, 97525 Schwebheim (DE)
(74) Representative: Schonecke, Mitja
(86) International application number: PCT/EP2011/054600
(87) International publication number: WO 2012/130271

(56) References cited:
- JP-A- 2003 049 831
- US-A1- 2007 169 868
- US-A1- 2009 123 098

## Description

The invention relates to a bearing arrangement comprising a bearing, by which an axle shaft is supported relatively to a housing, wherein a sensor is arranged to detect the rotational speed of the axle shaft relatively to the housing.

Such a bearing arrangement is known from US 2009/0123098 A1.

In a modern railway axle box it is necessary to detect exactly the rotational speed of the axle shaft relatively to the housing. A common solution is to equip the bearing with a sensor element, so that the rotational speed can be measured. The incorporation of the sensor into the bearing of the axle shaft is quite elaborate and thus costly. The part of the costs concerning the sensor is significant compared with the total costs of the axle box. Thus the mentioned concept is too complex and too expensive.

Another pre-known concept suggests to incorporate the sensor element in a cover element of the axle box. In this case optical sensors are employed which are mounted and fixed by a screw connection with the arrangement. Here, it is detrimental that a very precise adjustment of the sensor element is necessary to ensure a stable detection of the rotational speed of the axle shaft. Thus, the mounting of the system is costly. On the other hand the stability of the detection is jeopardized if the tolerances of the respective parts of the axle box are too big.

Thus, it is an object of the invention to propose a bearing arrangement of the kind mentioned above, especially for use in a railway axle box, which does not have the described disadvantages. So, it should to be ensured by the invention that a stable measurement of the rotational speed of the axle shaft is possible. On the other hand, the design should be simple so that a cost efficient realization is possible. Furthermore, it should be possible to use common and cost efficient components for the concept.

The solution of this object is characterized in that the sensor is integrated in a roller bearing, which roller bearing is arranged in a cover element, wherein the cover element is connected to the housing so that the cover element forms an axial end cover of the bearing arrangement.

The roller bearing is preferably a deep groove ball bearing.

Rotational transfer means can be arranged between the axle shaft and the roller bearing for transferring the rotational movement of the axle shaft to one of the rings of the roller bearing. The rotational transfer means can comprise a pin which is arranged excentrically in an axial end of the axle shaft, wherein the pin cooperates with a fork-shaped cam which is fixed directly or indirectly with one of the rings of the roller bearing. Furthermore, the fork-shaped cam can be arranged at a shaft element which is supported by the inner ring of the roller bearing.

The shaft element can have a flange section forming an axial stop for the inner ring of the roller bearing. Also, the shaft element can be axially fixed relatively to the inner ring of the roller bearing by means of a retaining ring.

The cover element can comprise a cylindrical seat for the outer ring of the roller bearing. The outer ring of the roller bearing is preferably arranged in the seat with a press fit.

The cover element comprises according to a preferred embodiment of the invention two housing parts, wherein a first housing part is connected with the housing and a second housing part is connected with the first housing part. The connection between the housing parts and the housing can be established by screw connection means.

The cylindrical seat for the outer ring of the roller bearing is preferably delimited by an axial face, wherein the perpendicular onto the axial face is directed away from the bearing.

The cover element can furthermore be designed as a sealed unit. In this case it can be provided that the cover element comprises a radial shaft seal for sealing of the shaft element relatively to a part of the cover element.

The sensor comprises preferably a magnetized sensor ring which cooperates with a magnetic detector.

The bearing arrangement is preferably a part of a railway axle box.

Thus, the idea of the invention is to go without costly sensor elements which are integrated in the bearing by which the axle shaft is supported in the housing. Instead, a standard sensor bearing, which is a catalogue product made by the producers of bearings, is used. By such a sensor bearing the rotational speed as well as the number of revolutions can be detected and counted respectively.

Preferably, a simple sensorized deep groove ball bearing is used which is pressed in a cover housing and is then fixed at the housing of the axle box by screws.

So, big cost advantages are obtained as the employed sensorized bearing is a standard product and thus very cheap. Especially, when a magnetized sensor ring is used the detection can take place in a precise manner which is not sensitive to tolerances of the used parts.

In the drawing embodiments of the invention are shown.
- Fig. 1: shows a cross sectional view of a part of a bearing arrangement being a part of a railway axle box, showing the general design of the arrangement and
- Fig. 2: shows a cross sectional view of a cover element where details of the proposed design are apparent.

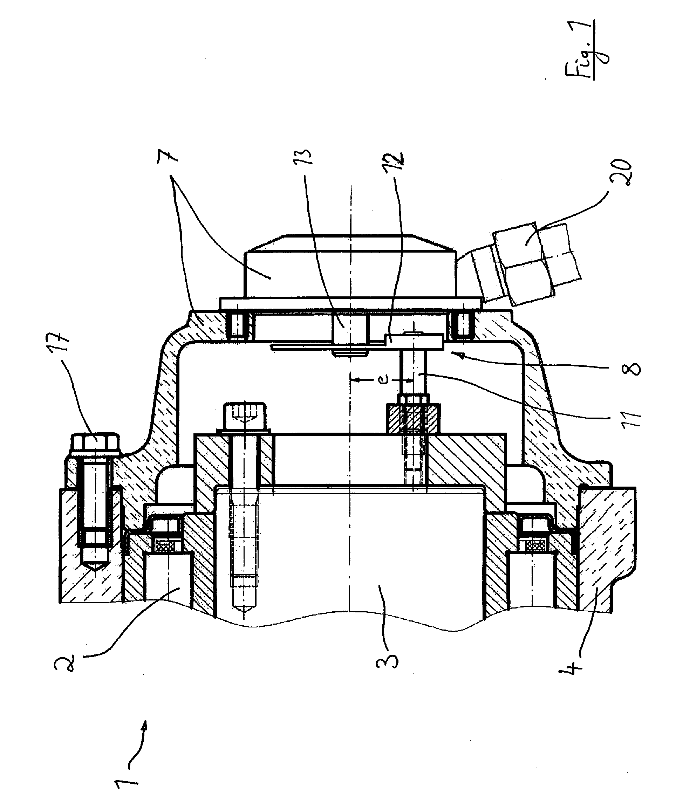

In Figure 1 a bearing arrangement 1 being a part of a railway axle box is shown which comprises an axle shaft 3 which is supported relatively to a housing 4 by means of a bearing 2. The rotational speed of the axle shaft 3 has to be detected quite precisely. Therefore, sensor means (not depicted in detail in Fig. 1) are used which are arranged in a cover element 7. The cover element 7 is forming an axial end cover of the axle box 1. It is firmly attached to the housing 4 by means of a screw connection 17.

The rotational movement of the axle shaft 3 is transferred to the sensor by rotational transfer means 8. Those means comprise a pin 11 which is fixed in one of the axial face sides of the axle shaft 3. The pin 11 extends in axial direction and is arranged with an excentricity e to the axis of the axle shaft 3. It is engaged in a fork-shaped opening of a cam 12 which is firmly connected with a shaft element 13 which is explained later on in detail.

The signal obtained by the sensor is led to an electrical connector 20.

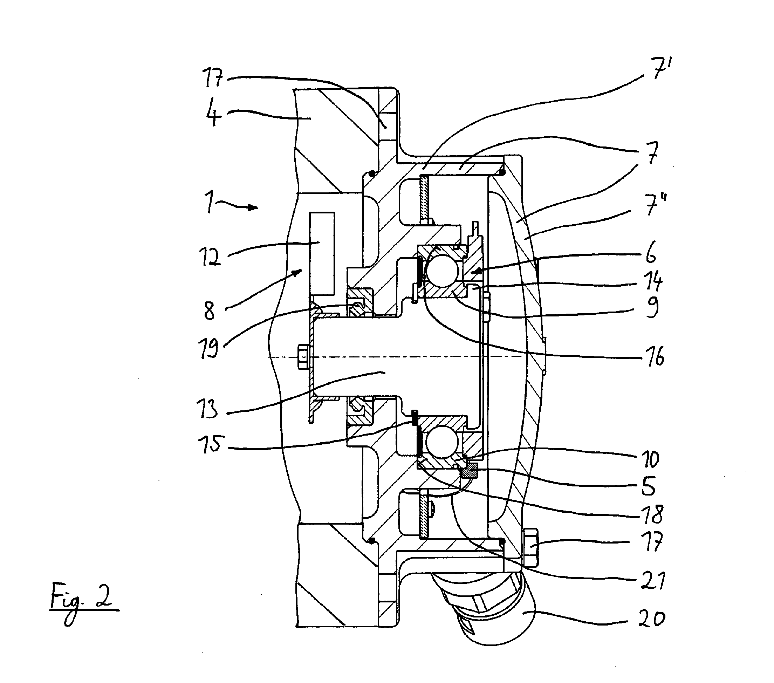

Details of the concept are apparent from Fig. 2 for a preferred embodiment of the invention. Here it can be seen that the cover element 7 consists of two housing parts 7' and 7". Both parts 7', 7" are connected by screw connection means 17; this applies also for the fixation of the whole cover part 7 at the housing 4.

The cover element 7 and more specifically the first housing part 7' comprises the depicted cross section. A relevant design aspect is an axial extending section which forms a cylindrical seat 16 for the outer ring 10 of the bearing 6. The cylindrical seat 16 is delimited in axial direction by an axial face 18 which forms a stop for the inner ring 9 of the bearing 6.

The roller bearing 6 is designed in the present case as a deep groove ball bearing. A sensor 5 is incorporated in the roller bearing 6, i. e. a roller bearing 6 is used which is designed as a sensorized bearing. The sensor 5 is connected by wires 21 to the electrical connector 20.

The inner ring 9 of the roller bearing 6 supports the shaft element 13. To fix the shaft element 13 relatively to the inner ring 9 of the bearing in axial direction a flange section 14 is provided which establishes an axial stop for the shaft element 13. Furthermore, the fixation is done by a retaining ring 15. The roller bearing 6 is axially pressed (in Fig. 2 from the right side) into the cylindrical seat 16 until the axial face 18 is reached by the outer ring 10. Between the outer ring 10 and the cylindrical seat 16 a press fit connection is established to hold the outer ring 10 secure in its position in the cylindrical seat 16.

The whole cover element 7 is designed to be a sealed unit. Therefore, a radial shaft seal 19 is arranged which seals the housing part 7' against the shaft element 13.

### List of Reference Numerals

- 1: Bearing arrangement
- 2: Bearing
- 3: Axle shaft
- 4: Housing
- 5: Sensor
- 6: Roller bearing
- 7: Cover element
- 7': Housing part
- 7": Housing part
- 8: Rotational transfer means
- 9: Inner rings
- 10: Outer ring
- 11: Pin
- 12: Fork-shaped cam
- 13: Shaft element
- 14: Flange section
- 15: Retaining ring
- 16: Cylindrical seat
- 17: Screw connection means
- 18: Axial face
- 19: Radial shaft seal
- 20: Electrical connector
- 21: Wire

- e: excentricity

## Claims

1. Bearing arrangement (1) comprising a bearing (2), by which an axle shaft (3) is supported relatively to a housing (4), wherein a sensor (5) is arranged to detect the rotational speed of the axle shaft (3) relatively to the housing (4), **characterized in that** the sensor (5) is integrated in a roller bearing (6), which roller bearing (6) is arranged in a cover element (7), wherein the cover element (7) is connected to the housing (4) so that the cover element (7) forms an axial end cover of the bearing arrangement (1).

2. Bearing arrangement (1) according to claim 1, **characterized in that** the roller bearing (6) is a deep groove ball bearing.

3. Bearing arrangement (1) according to claim 1 or 2, **characterized in that** rotational transfer means (8) are arranged between the axle shaft (3) and the roller bearing (6) for transferring the rotational movement of the axle shaft (3) to one of the rings (9, 10) of the roller bearing (6).

4. Bearing arrangement (1) according to claim 3, **characterized in that** the rotational transfer means (8) comprise a pin (11) which is arranged excentrically (e) in an axial end of the axle shaft (3), wherein the pin (11) cooperates with a fork-shaped cam (12) which is fixed directly or indirectly with one of the rings (9, 10) of the roller bearing (6).

5. Bearing arrangement (1) according to claim 4, **characterized in that** the fork-shaped cam (12) is arranged at a shaft element (13) which is supported by the inner ring (9) of the roller bearing (6).

6. Bearing arrangement (1) according to claim 5, **characterized in that** the shaft element (13) has a flange section (14) forming an axial stop for the inner ring (9) of the roller bearing (6).

7. Bearing arrangement (1) according to claim 5 or 6, **characterized in that** the shaft element (13) is axially fixed relatively to the inner ring (9) of the roller bearing (6) by means of a retaining ring (15).

8. Bearing arrangement (1) according to one of claims 1 to 7, **characterized in that** the cover element (7) comprises a cylindrical seat (16) for the outer ring (10) of the roller bearing (6).

9. Bearing arrangement (1) according to claim 8, **characterized in that** the outer ring (10) of the roller bearing (6) is arranged in the seat (16) with a press fit.

10. Bearing arrangement (1) according to one of claims 1 to 9, **characterized in that** the cover element (7) comprises two housing parts (7', 7"), wherein a first housing part (7') is connected with the housing (4) and a second housing part (7") is connected with the first housing part (7').

11. Bearing arrangement (1) according to claim 10, **characterized in that** connection between the housing parts (7', 7") and the housing (4) is established by screw connection means (17).

12. Bearing arrangement (1) according to one of claims 8 to 11, **characterized in that** the cylindrical seat (16) for the outer ring (10) of the roller bearing (6) is delimited by an axial face (18), wherein the perpendicular onto the axial face (18) is directed away from the bearing (2).

13. Bearing arrangement (1) according to one of claims 1 to 12, **characterized in that** the cover element (7) is designed as a sealed unit.

14. Bearing arrangement (1) according to one of claims 5 to 13, **characterized in that** the cover element (7) comprises a radial shaft seal (19) for sealing of the shaft element (13) relatively to a part of the cover element (7').

15. Bearing arrangement (1) according to one of claims 1 to 14, **characterized in that** the sensor (5) comprises a magnetized sensor ring which cooperates with a magnetic detector.

16. Bearing arrangement (1) according to one of claims 1 to 15, **characterized in that** it is a part of a railway axle box.

## Patentansprüche

1. Lageranordnung (1), umfassend ein Lager (2), von dem eine Achswelle (3) in Bezug auf ein Gehäuse (4) abgestützt wird, wobei ein Sensor (5) angeordnet ist, um die Drehzahl der Achswelle (3) in Bezug auf das Gehäuse (4) zu erkennen, **dadurch gekennzeichnet, dass** der Sensor (5) in einem Rollenlager (6) integriert ist, wobei das Rollenlager (6) in einem Abdeckelement (7) angeordnet ist, wobei das Abdeckelement (7) mit dem Gehäuse (4) verbunden ist, sodass das Abdeckelement (7) eine axiale Endabdeckung der Lageranordnung (1) bildet.

2. Lageranordnung (1) nach Anspruch 1, **dadurch gekennzeichnet, dass** das Rollenlager (6) ein Rillenkugellager ist.

3. Lageranordnung (1) nach Anspruch 1 oder 2, **dadurch gekennzeichnet, dass** Drehübertragungsmittel (8) zwischen der Achswelle (3) und dem Rollenlager (6) zum Übertragen der Drehbewegung der Achswelle (3) auf einen der Ringe (9, 10) des Rollenlagers (6) angeordnet sind.

4. Lageranordnung (1) nach Anspruch 3, **dadurch gekennzeichnet, dass** die Drehübertragungsmittel (8) einen Stift (11) umfassen, der exzentrisch (e) in einem axialen Ende der Achswelle (3) angeordnet ist, wobei der Stift (11) mit einem gabelförmigen Nocken (12) zusammenwirkt, der direkt oder indirekt an einem der Ringe (9, 10) des Rollenlagers (6) befestigt ist.

5. Lageranordnung (1) nach Anspruch 4, **dadurch gekennzeichnet, dass** der gabelförmige Nocken (12) an einem Wellenelement (13) befestigt ist, das von dem inneren Ring (9) des Rollenlagers (6) abgestützt wird.

6. Lageranordnung (1) nach Anspruch 5, **dadurch gekennzeichnet, dass** das Wellenelement (13) einen Flanschabschnitt (14) aufweist, der einen axialen Anschlag für den inneren Ring (9) des Rollenlagers (6) bildet.

7. Lageranordnung (1) nach Anspruch 5 oder 6, **dadurch gekennzeichnet, dass** das Wellenelement (13) in Bezug auf den inneren Ring (9) des Rollenlagers (6) mittels eines Halterings (15) axial befestigt ist.

8. Lageranordnung (1) nach einem der Ansprüche 1 bis 7, **dadurch gekennzeichnet, dass** das Abdeckelement (7) einen zylindrischen Sitz (16) für den äußeren Ring (10) des Rollenlagers (6) umfasst.

9. Lageranordnung (1) nach Anspruch 8, **dadurch gekennzeichnet, dass** der äußere Ring (10) des Rollenlagers (6) in dem Sitz (16) mit einem Presssitz angeordnet ist.

10. Lageranordnung (1) nach einem der Ansprüche 1 bis 9, **dadurch gekennzeichnet, dass** das Abdeckelement (7) zwei Gehäuseteile (7', 7") umfasst, wobei ein erstes Gehäuseteil (7') mit dem Gehäuse (4) verbunden ist und ein zweites Gehäuseteil (7") mit dem ersten Gehäuseteil (7') verbunden ist.

11. Lageranordnung (1) nach Anspruch 10, **dadurch gekennzeichnet, dass** die Verbindung zwischen den Gehäuseteilen (7', 7") und dem Gehäuse (4) über Schraubenverbindungsmittel (17) hergestellt wird.

12. Lageranordnung (1) nach einem der Ansprüche 8 bis 11, **dadurch gekennzeichnet, dass** der zylindrische Sitz (16) für den äußeren Ring (10) des Rollenlagers (6) von einer axialen Fläche (18) begrenzt wird, wobei die Senkrechte zu der axialen Fläche (18) weg von dem Lager (2) gerichtet ist.

13. Lageranordnung (1) nach einem der Ansprüche 1 bis 12, **dadurch gekennzeichnet, dass** das Abdeckelement (7) als abgedichtete Einheit ausgestaltet ist.

14. Lageranordnung (1) nach einem der Ansprüche 5 bis 13, **dadurch gekennzeichnet, dass** das Abdeckelement (7) eine radiale Wellendichtung (19) zum Abdichten des Wellenelements (13) in Bezug auf einen Teil des Abdeckelements (7') umfasst.

15. Lageranordnung (1) nach einem der Ansprüche 1 bis 14, **dadurch gekennzeichnet, dass** der Sensor (5) einen magnetisierten Sensorring umfasst, der mit einem magnetischen Detektor zusammenwirkt.

16. Lageranordnung (1) nach einem der Ansprüche 1 bis 15, **dadurch gekennzeichnet, dass** diese Teil eines Eisenbahnachslagers ist.

## Revendications

1. Système de palier (1) comprenant un palier (2), par le biais duquel un arbre d'essieu (3) est supporté par rapport à un logement (4), un capteur (5) étant prévu pour détecter la vitesse de rotation de l'arbre d'essieu (3) par rapport au logement (4), **caractérisé en ce que** le capteur (5) est intégré dans un palier à roulement (6), ledit palier à roulement (6) étant disposé dans un élément formant couvercle (7), l'élément formant couvercle (7) étant raccordé au logement (4) de telle sorte que l'élément formant couvercle (7) forme un couvercle d'extrémité axial du système de palier (1).

2. Système de palier (1) selon la revendication 1, **caractérisé en ce que** le palier à roulement (6) est un roulement à billes à gorges profondes.

3. Système de palier (1) selon la revendication 1 ou 2, **caractérisé en ce que** des moyens de transfert de rotation (8) sont prévus entre l'arbre d'essieu (3) et le palier à roulement (6) afin de transférer le mouvement de rotation de l'arbre d'essieu (3) à l'une des bagues (9, 10) du palier à roulement (6).

4. Système de palier (1) selon la revendication 3, **caractérisé en ce que** le moyen de transfert de rotation (8) comprend une broche (11) qui est disposée de manière excentrique (e) dans une extrémité axiale de l'arbre d'essieu (3), la broche (11) coopérant avec une came en forme de fourche (12) qui est fixée directement ou indirectement avec l'une des bagues (9, 10) du palier à roulement (6).

5. Système de palier (1) selon la revendication 4, **caractérisé en ce que** la came en forme de fourche (12) est disposée au niveau d'un élément d'arbre (13) qui est supporté par la bague intérieure (9) du palier à roulement (6).

6. Système de palier (1) selon la revendication 5, **caractérisé en ce que** l'élément d'arbre (13) comporte une section de collerette (14) formant une butée axiale pour la bague intérieure (9) du palier à roulement (6).

7. Système de palier (1) selon la revendication 5 ou 6, **caractérisé en ce que** l'élément d'arbre (13) est fixé axialement par rapport à la bague intérieure (9) du palier à roulement (6) au moyen d'un anneau de retenue (15).

8. Système de palier (1) selon l'une des revendications 1 à 7, **caractérisé en ce que** l'élément formant couvercle (7) comprend un siège cylindrique (16) pour la bague extérieure (10) du palier à roulement (6).

9. Système de palier (1) selon la revendication 8, **caractérisé en ce que** la bague extérieure (10) du palier à roulement (6) est disposée dans le siège (16) avec un ajustement avec serrage.

10. Système de palier (1) selon l'une des revendications 1 à 9, **caractérisé en ce que** l'élément formant couvercle (7) comprend deux parties de logement (7', 7"), une première partie de logement (7') étant raccordée au logement (4) et une seconde partie de logement (7") étant raccordée à la première partie de logement (7').

11. Système de palier (1) selon la revendication 10, **caractérisé en ce que** le raccordement entre les parties de logement (7', 7") et le logement (4) est réalisé par des moyens de raccordement par vissage (17).

12. Système de palier (1) selon l'une des revendications 8 à 11, **caractérisé en ce que** le siège cylindrique (16) pour la bague extérieure (10) du palier à roulement (6) est délimité par une face axiale (18), la perpendiculaire à la face axiale (18) étant orientée dans une direction s'éloignant du palier (2).

13. Système de palier (1) selon l'une des revendications 1 à 12, **caractérisé en ce que** l'élément formant couvercle (7) est conçu sous la forme d'une unité hermétique.

14. Système de palier (1) selon l'une des revendications 5 à 13, **caractérisé en ce que** l'élément formant couvercle (7) comprend un élément d'étanchéité d'arbre radial (19) assurant l'étanchéité de l'élément d'arbre (13) par rapport à une partie de l'élément formant couvercle (7).

15. Système de palier (1) selon l'une des revendications 1 à 14, **caractérisé en ce que** le capteur (5) comprend une bague de capteur magnétisée qui coopère avec un détecteur magnétique.

16. Système de palier (1) selon l'une des revendications 1 à 15, **caractérisé en ce qu'**il fait partie d'une boîte d'essieu ferroviaire.
